# FASCICULE DE BREVET EUROPEEN

(11) **EP 2 461 443 B1**
(45) Date de publication et mention de la délivrance du brevet: **26.10.2016**
(21) Numéro de dépôt: 11354061.1
(22) Date de dépôt: 04.11.2011
(51) Int. Cl.: H02G 3/04, H02G 3/22

(54) **Bouchon pour gaine électrique**
Stöpsel zum Verschließen eines Rohrs zum Verlegen von Kabeln
Plug for electric duct

(30) Priorité: 02.12.2010 FR 1004695
(43) Date de publication de la demande: 06.06.2012
(73) Titulaire: Schneider Electric Industries SAS, 92500 Rueil-Malmaison (FR)
(72) Inventeur: Perrin, Alain, 38050 Grenoble Cedex 09 (FR)
(74) Mandataire: Tripodi, Paul

(56) Documents cités:
- WO-A1-89/05533
- DE-U1- 20 310 276
- DE-U1-202010 006 031
- US-A- 3 744 528

## Description

### DOMAINE TECHNIQUE DE L'INVENTION

L'invention est relative à un bouchon pour gaine électrique comportant une première paroi de forme cylindrique s'étendant selon un axe longitudinal et comportant à une première extrémité fermée par une zone auto-perçante apte à être transpercée par le passage d'au moins un fil électrique. Ladite zone s'étendant vers l'intérieur dudit bouchon selon une direction radiale sensiblement perpendiculaire à l'axe longitudinal. Le bouchon comporte une deuxième paroi de forme annulaire solidaire de la première paroi cylindrique et s'étendant vers l'extérieur dudit bouchon selon une direction radiale, ladite deuxième paroi comportant une zone d'appui destinée à venir en appui sur le bord cylindrique externe d'une gaine électrique.

L'invention est aussi relative à un procédé de fixation sur une gaine électrique d'un bouchon selon l'invention.

### ETAT DE LA TECHNIQUE ANTERIEURE

Le respect de l'étanchéité entre l'intérieur et l'extérieur d'un bâtiment est une préoccupation des constructeurs. Des réglementations techniques sont amenées à imposer des tests d'étanchéité pour la construction des bâtiments neufs et rénovés. Les tests consistent à vérifier la présence d'une étanchéité suffisante entre l'extérieur et l'intérieur du bâtiment, ledit bâtiment se comportant comme une enveloppe plus ou moins étanche.

L'ensemble des corps de métier du bâtiment sont impactés. En effet, tous les conduits électriques utilisés pour les moyens de télécommunication, les moyens d'éclairage extérieur, les volets roulants, la sonnette, la commande du portail, le contrôle d'accès, sont amenés à traverser l'enveloppe du bâtiment.

Par conséquence des gaines électriques flexibles peuvent véhiculer de l'air et réduire les performances en termes d'étanchéité du bâtiment. Des mesures doivent être prises pour circonscrire le flux d'air et d'éviter qu'il ne se propage dans l'installation.

Par ailleurs, un conduit électrique reliant deux points à l'intérieur de l'enveloppe peut être noyé dans des matériaux en zone froide notamment lorsque le conduit traverse une dalle de compression. Ledit conduit peut aussi traverser une zone froide lorsqu'il circule par exemple au dessus du faux plafond du dernier étage. Dans ces différents cas, la circulation d'air peut engendrer un phénomène de condensation avec l'apparition de condensats et des désordres sous jacent.

Pour éviter que les gaines électriques soient les vecteurs de courants d'air, des solutions existent.

Certains constructeurs de matériel électrique développent des bouchons adaptables sur les gaines électriques souples et annelées, voir DE20310276U1, DE202010006031 U1 et US3744528. Dans une première étape, les bouchons sont destinés à être percés par les fils électriques puis dans une seconde étape, ils sont insérés en force dans la gaine souple annelée tout en glissant le long des fils électriques. Cependant, lorsque le bouchon rencontre l'extrémité de la gaine, la résistance offerte par cette dernière peut être élevée et l'installation du bouchon peut devenir contraignante. En effet, l'utilisateur doit à la fois tenir l'extrémité de la gaine, faire glisser le bouchon sur les fils et l'insérer dans la gaine. Cette triple manipulation reste contraignante en termes de mise en oeuvre.

D'autres solutions consistent à utiliser des embouts de gaine préformés. Ces solutions exploitées notamment dans l'automobile sont utilisables de préférence pour des sections de gaine et un nombre de fils préalablement prédéfinis. Dans la construction des bâtiments, le nombre de fils est rarement défini d'avance et peut être évolutif pendant la durée de vie de l'installation. Ces solutions employant des embouts préformés ne sont pas vraiment exploitables dans la construction de bâtiment.

Enfin, certaines solutions utilisent des embouts de gaine thermo rétractable. L'utilisation d'outil chauffant pour conformer les embouts en gaine thermo rétractable reste une contrainte parfois difficile à gérer sur un chantier de construction de bâtiment.

### EXPOSE DE L'INVENTION

L'invention vise donc à remédier aux inconvénients de l'état de la technique, de manière à proposer un bouchon de gaine électrique qui assure une bonne étanchéité et qui soit pratique à utiliser.

La deuxième paroi du bouchon selon l'invention comprend à sa périphérie une zone déformable selon la partie caractérisante de la revendication 1.

Selon un mode de développement de l'invention, la zone déformable de recouvrement comporte à sa périphérie une partie déformable apte à rentrer dans une des annelures de la paroi externe de la gaine électrique dans la position de fixation.

De préférence, le bouchon est réalisé dans un matériau étanche à l'air.

De préférence, la zone auto-perçante est répartie uniformément autour de l'axe longitudinal et est constituée dans un matériau élastique auto-cicatrisant qui une fois percé se resserre autour du fil et lorsque l'on retire le fil se rétracte pour réassurer l'étanchéité.

De préférence, la zone d'appui a une forme annulaire et se développe autour de l'axe longitudinal, ladite forme annulaire ayant un diamètre externe supérieur ou égal au diamètre externe de la gaine électrique.

Avantageusement, la première paroi de forme cylindrique a un diamètre externe inférieur au diamètre interne de la gaine électrique.

Un procédé de fixation sur une gaine électrique d'un bouchon tel que défini ci-dessus consiste à :
- faire passer au moins un fil électrique à travers la zone auto perçante en la perforant,
- faire glisser le bouchon sur ledit au moins un fils électrique pour positionner la première paroi dudit bouchon à l'intérieur de la gaine électrique,
- appliquer une force de pression à la fois sur la zone d'appui et la zone déformable de la seconde paroi,
- accompagner manuellement le retournement du bouchon, le retournement s'illustrant par un recouvrement de la gaine externe électrique par la zone déformable.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
la figure 1 représente une vue de coté du bouchon selon un mode préférentiel de réalisation de l'invention ;
les figures 2 à 6 représentent le bouchon selon la figure 1 dans différentes phase de montage sur une extrémité de gaine électrique ;
la figure 7 représente une vue d'ensemble d'une prise électrique dans laquelle une gaine électrique comporte un bouchon selon la figure 1.

### DESCRIPTION DETAILLEE D'UN MODE DE REALISATION

Le bouchon pour gaine électrique est destiné à être positionné à une extrémité d'une gaine électrique pour obstruer ladite extrémité tout en laissant passer le ou les fils électriques circulant à l'intérieur de la gaine. Le bouchon est ainsi réalisé dans un matériau étanche à l'air. A titre d'exemple de réalisation le bouchon est réalisé en élastomère.

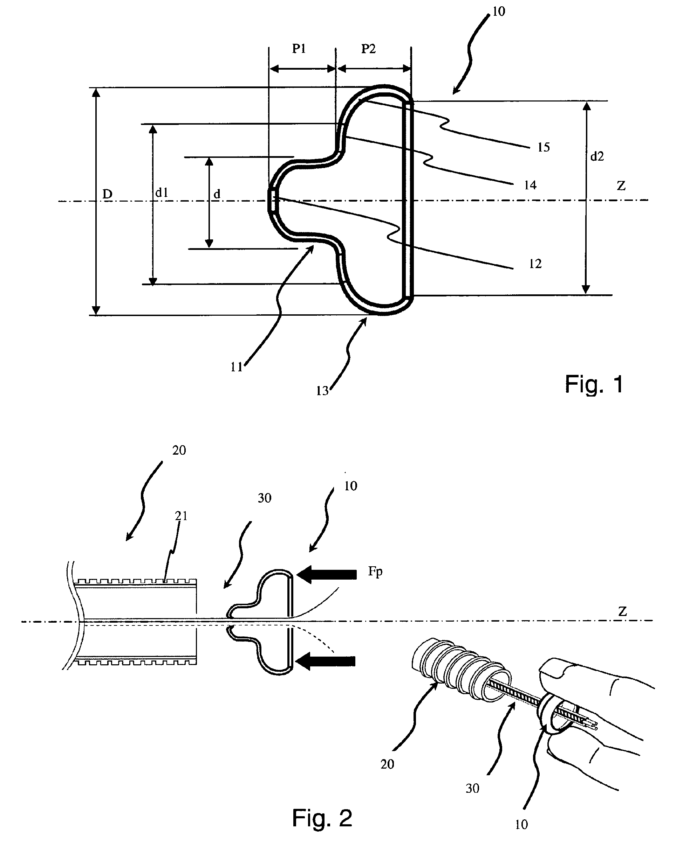

Selon un mode de réalisation préférentiel tel que représenté sur la figure 1, le bouchon comporte une première paroi 11 de forme cylindrique s'étendant selon un axe longitudinal Z. Cette première paroi 11 est destinée à être positionnée à l'intérieur d'une gaine électrique 20 au moment du positionnement du bouchon 10. Ainsi le diamètre externe d de ladite paroi est inférieur au diamètre interne de la gaine électrique 20.

En outre, ladite première paroi s'étend sur une longueur P1. La longueur P1 du bouchon 10 est ajustée de telle façon à pouvoir rentrer dans la gaine 20 lors de l'installation du bouchon 10 tout en gardant une élasticité suffisante pour conserver sa forme lors du glissement le long des fils électriques 30. Cette longueur est aussi ajustée de manière à ce que la première paroi 11 possède une capacité de retournement lorsque une fois installés les fils 30 sont tirés vers l'extérieur de la gaine électrique 20. Cette faculté permet de limiter l'usure au point de contact avec les fils pour garantir l'étanchéité après et lors des opérations de maintenance de l'appareillage électrique.

La première paroi 11 comporte à une première extrémité fermée par une zone auto-perçante 12 apte à être transpercée par le passage d'au moins un fil électrique 30. Ladite zone s'étend vers l'intérieur dudit bouchon selon une direction radiale sensiblement perpendiculaire à l'axe longitudinal Z.

A titre d'exemple de réalisation, la zone auto-perçante 12 est répartie uniformément autour de l'axe longitudinal Z et est constituée dans un matériau élastique auto-cicatrisant. On entend par matériau auto-cicatrisant un matériau qui une fois percé se resserre autour du fil de manière spontanée. En outre, lorsqu'un fil électrique est retiré, le matériau se rétracte pour réassurer l'étanchéité. Selon un mode particulier de réalisation le matériau utilisé pour réaliser la zone auto-perçante 12 est en élastomère auto cicatrisant par exemple de type supramoléculaire.

Le bouchon 10 pour gaine électrique comporte une deuxième paroi 13 de forme annulaire solidaire de la première paroi cylindrique 11. Selon le mode de réalisation tel que représenté sur la figure 1, la deuxième paroi de forme annulaire est rattachée à une seconde extrémité de la première paroi cylindrique et s'étend vers l'extérieur dudit bouchon.

En outre, ladite seconde paroi s'étend sur une longueur P2. La longueur P2 du bouchon est ajustée de telle façon à pourvoir glisser un doigt à l'intérieur de la seconde paroi du bouchon lors de l'installation. Ceci pour faciliter la mise en oeuvre. En outre, la longueur P2 doit être suffisamment longue pour recouvrir la paroi extérieure de la gaine électrique 20. Selon une variante de réalisation, la longueur P2 est suffisante pour que l'extrémité de la seconde paroi puisse se loger dans le creux d'une annelure après installation tout en serrant suffisamment la gaine. Cette configuration permet d'installer et d'adapter facilement le bouchon selon l'invention sur plusieurs diamètres de gaine.

En outre ladite deuxième paroi 13 comporte une zone d'appui 14 destinée à venir en appui sur le bord cylindrique externe de la gaine électrique 20 lorsque le bouchon 10 est position sur ladite gaine. La zone d'appui 14 a une forme annulaire et se développe autour de l'axe longitudinal Z. A titre d'exemple de réalisation, ladite forme annulaire a de préférence un diamètre d1 externe supérieur ou égal au diamètre externe de la gaine électrique 20 sur laquelle elle vient s'appuyer.

Selon un mode préférentiel de réalisation de l'invention, la deuxième paroi 13 comprend à sa périphérie une zone déformable 15 de recouvrement apte à prendre deux positions de fonctionnement. A titre d'exemple de réalisation, ladite zone déformable s'étend au-delà du diamètre externe de la zone d'appui 14 de forme annulaire.

Tel que représentée sur la figure 2, une première position dite de repos est adoptée au moment où le bouchon 10 n'est pas encore positionné sur la gaine électrique 20. Dans la position de repos, ladite zone déformable 15 de recouvrement se développe selon une courbe s'écartant de la première paroi cylindrique 11. Selon un mode de réalisation de l'invention tel que représenté sur la figure 1, la zone déformable de recouvrement a une forme d'arc arrondi dont l'extrémité libre s'éloigne de la première extrémité de la première paroi cylindrique 11. Ladite extrémité libre délimite ainsi une cavité dont l'ouverture est sensiblement circulaire de diamètre d'ouverture d2. En outre, du fait de la forme de la zone déformable en arc arrondi, le diamètre d'ouverture d2 est aussi de préférence inférieur à un diamètre D externe du bouchon. Avant et pendant l'installation du bouchon, ledit diamètre d2 est suffisant grand pour le passage d'un doigt d'un utilisateur. Du fait de l'élasticité du matériau utilisé et de la forme de la zone déformable 15, ledit diamètre d2 est inférieur au diamètre de la gaine 20 mesurée au creux d'une annelure 21 après installation du bouchon sur la gaine.

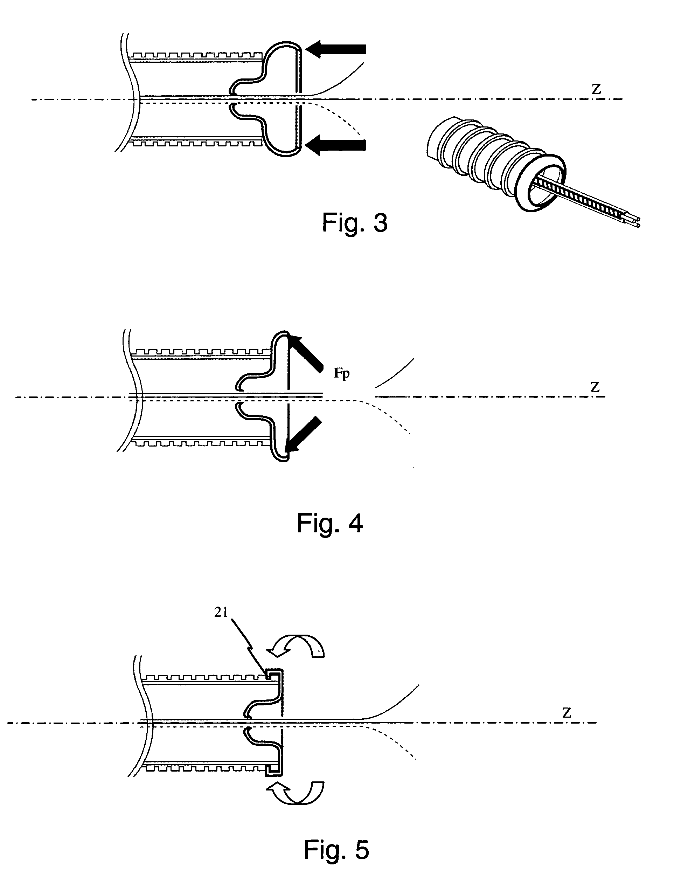

Tel que représentée sur la figure 4, une seconde position dite de fixation est adoptée au moment où le bouchon 10 est positionné sur l'extrémité de la gaine électrique 20. Dans la position de fixation, ladite zone déformable 15 est repliée pour recouvrir et enserrer une paroi externe de la gaine électrique 20.

Tel que représentée sur la figure 3, le passage de la position de repos à la position de fixation est réalisé quand la zone d'appui 14 est au contact de l'extrémité de la gaine 20 et qu'une force de pression F est exercée sur la deuxième paroi 13. La forme d'arc arrondi observé dans la première position de repos tend alors à se retourner de manière brusque pour venir enserrer la paroi externe de la gaine électrique 20. La force de pression Fp est exercée en direction de la gaine électrique 20, sensiblement parallèle à l'axe longitudinal Z. Afin de faciliter le passage de la position de repos à la position de fixation, en fin de positionnement, la force de pression peut être orientée selon une direction formant un angle de 45° par rapport à l'axe longitudinal Z.

Selon une variante de réalisation, la zone déformable de recouvrement 15 comporte à sa périphérie une partie réalisée dans un matériau hautement déformable. Dans la position de fixation, lorsque la zone déformable de recouvrement se replie sur la gaine 20, cette partie est alors apte à rentrer dans une des annelures 21 de la paroi externe de la gaine électrique.

L'invention est relative à un procédé de fixation sur une gaine électrique 20 d'un bouchon 10 tel que défini ci-dessus. Telle que représenté sur la figure 2, le procédé selon l'invention consiste à dans une première étape à faire passer au moins un fil électrique 30 à travers la zone auto perçante 12 en la perforant. Une pression de l'extrémité du fil électrique 30 sur zone auto-perçante permet la création d'une ouverture dans ladite paroi pour le passage dudit fil.

Dans une seconde étape telle que représentée sur la figure 3, le bouchon 10 est amené au contact de la gaine électrique en glissant le long du fil électrique. La première paroi cylindrique 11 est ensuite insérer dans la gaine électrique de manière que la zone d'appui du bouchon 14 du bouchon 10 vienne en contact avec l'extrémité de la gaine éclectique 20.

Telle que représenté sur la figure 4, l'étape suivante consiste à appliquer une force de pression Fp sur une face antérieure du bouchon 10, précisément que niveau de la zone déformable 13 de recouvrement.

Dans un mode particulier de réalisation, la force de pression Fp est appliquée suivant une direction formant un angle de 45° par rapport à l'axe longitudinale Z du bouchon.

Une dernière étape telle que représentée sur la figure 5 consiste à accompagner manuellement le retournement du bouchon, notamment le retournement de zone déformable de recouvrement qui passe d'une première position de fonction dite de repos à une position de fixation. Ce retournement se fait de manière automatique et est provoqué par l'action de la force de pression notamment sur une zone entre la zone d'appui et la zone de zone déformable de recouvrement. Ce retournement s'illustre ainsi par un recouvrement de la gaine externe électrique par la zone déformable.

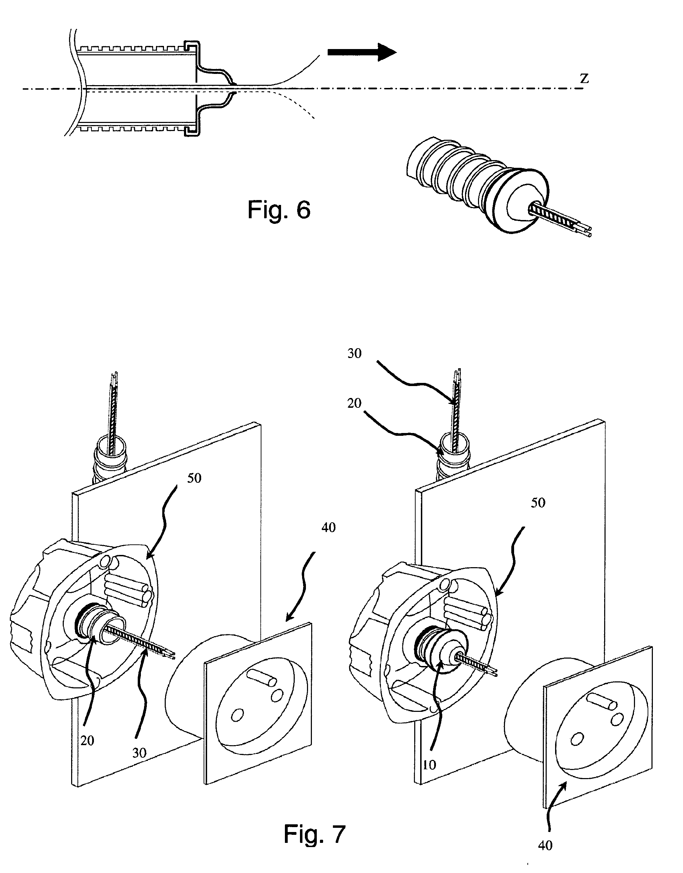

Comme représenté sur les figures 6 et 7, si l'utilisateur au cours de l'installation d'une prise électrique 40 dans une boite d'encastrement 50, est amené à retirer légèrement les fils électrique de la gaine 20, la première paroi cylindrique 11 du bouchon 10 tend à se retourner et à se placer à l'extérieur de la gaine 20. Cette élasticité de la première paroi 11 permet d'assurer une bonne étanchéité du bouchon tout en laissant à l'utilisateur une liberté de manoeuvre quand aux manipulations possibles.

Plus généralement, le bouchon pourra être aussi utilisé pour boucher des gaines sans fils électrique à l'intérieur, notamment avant le tirage des fils. Ceci permettra de réaliser le test d'étanchéité intermédiaire sans avoir recours à l'opération longue de devoir boucher l'extrémité des gaines par un ruban adhésive. Le procédé de fixation du bouchon sur la gaine est alors sensiblement identique à celui décrit précédement et consistera notamment à dans une première étape positionner la première paroi dudit bouchon à l'intérieur de la gaine électrique, puis appliquer une force de pression à la fois sur la zone d'appui et la zone déformable de la seconde paroi, et enfin accompagner manuellement le retournement du bouchon. Le retournement s'illustre par un recouvrement de la gaine externe électrique par la zone déformable.

## Revendications

1. Bouchon pour gaine électrique (20) comportant
- une première paroi (11) de forme cylindrique s'étendant selon un axe longitudinal (Z) et comportant à une première extrémité fermée par une zone auto-perçante (12) apte à être transpercée par le passage d'au moins un fil électrique (30), ladite zone s'étendant vers l'intérieur dudit bouchon selon une direction radiale sensiblement perpendiculaire à l'axe longitudinal (Z) ;
- une deuxième paroi (13) de forme annulaire solidaire de la première paroi cylindrique et s'étendant vers l'extérieur dudit bouchon selon une direction radiale, ladite deuxième paroi comportant une zone d'appui (14) destinée à venir en appui sur le bord cylindrique externe d'une gaine électrique (20) ;
bouchon, **caractérisé en ce que** la deuxième paroi (13) comprend à sa périphérie une zone déformable de recouvrement (15) apte à prendre deux positions de fonctionnement :
- une position de repos où ladite zone déformable(15) se développe selon une courbe s'écartant de la première paroi (11), ladite première paroi étant destinée à rentrer à l'intérieur de la gaine électrique
- une position de fixation où, lorsque le bouchon est positionné sur l'extrémité de la gaine et ladite première paroi cylindrique (11) rentre à l'intérieur de la gaine électrique, ladite zone déformable (15) est repliée pour recouvrir et enserrer une paroi externe de la gaine électrique (20) et se développe selon une courbe sensiblement parallèle à la première paroi (11) pour s'en approcher;
le passage de la position de repos à la position de fixation étant réalisé par l'application d'une force de pression (Fp) sur la deuxième paroi (13).

2. Bouchon selon la revendication 1, **caractérisé en ce que** la zone déformable de recouvrement (15) comporte à sa périphérie une partie déformable apte, dans la position de fixation, à se développer selon une courbe de manière sensiblement perpendiculaire à la première paroi (11) pour s'en approcher et pour rentrer dans une des annelures de d'une paroi externe d'une gaine électrique.

3. Bouchon selon les revendications 1 ou 2, **caractérisé en ce que** le bouchon (10) est réalisé dans un matériau étanche à l'air.

4. Bouchon selon l'une des revendications 1 à 3, **caractérisé en ce que** la zone auto-perçante (12) est répartie uniformément autour de l'axe longitudinal (Z) et est constituée dans un matériau élastique auto-cicatrisant qui une fois percé se resserre autour du fil et lorsque l'on retire le fil se rétracte pour réassurer l'étanchéité.

5. Bouchon selon l'une quelconque des revendications précédentes, **caractérisé en ce que** la zone d'appui (14) a une forme annulaire et se développe autour de l'axe longitudinal (Z), ladite forme annulaire ayant un diamètre externe supérieur ou égal au diamètre externe de la gaine électrique (20).

6. Bouchon selon l'une quelconque des revendications précédentes, **caractérisé en ce que** la première paroi de forme cylindrique a un diamètre externe inférieur au diamètre interne de la gaine électrique.

7. Procédé de fixation sur une gaine électrique d'un bouchon (10) selon l'une quelconque des revendications précédentes, ledit procédé comportant les étapes suivantes:
- faire passer au moins un fil électrique (30) à travers la zone auto perçante (12) en la perforant,
- faire glisser le bouchon (20) sur ledit au moins un fils électrique pour positionner la première paroi (11) dudit bouchon à l'intérieur de la gaine électrique;
ledit procédé étant **caractérise en ce qu'**il comporte les étapes suivantes:
- appliquer une force de pression (Fp) à la fois sur la zone d'appui (14) et la zone déformable (15) de la seconde paroi (13),
- accompagner manuellement le retournement du bouchon (10), le retournement s'illustrant par un recouvrement de la gaine externe électrique par la zone déformable (15).

## Patentansprüche

1. Stöpsel für ein Kabelrohr (20), umfassend:
- eine erste Wand (11) von zylindrischer Form, die sich entlang einer Längsachse (Z) erstreckt und an einem ersten Ende umfasst, das durch eine selbstdurchbohrende Zone (12) geschlossen ist, die geeignet ist, durch den Durchgang mindestens eines elektrischen Drahtes (30) durchstoßen zu werden, wobei sich die Zone in das Innere des Stöpsels in eine Radialrichtung im Wesentlichen senkrecht auf die Längsachse (Z) erstreckt;
- eine zweite Wand (13) von ringförmiger Form, die mit der ersten zylindrischen Wand verbunden ist und sich zur Außenseite des Stöpsels in eine Radialrichtung erstreckt, wobei die zweite Wand eine Auflagezone (14) umfasst, die dazu bestimmt ist, auf dem äußeren zylindrischen Rand eines Kabelrohrs (20) zur Auflage zu gelangen;
wobei der Stöpsel **dadurch gekennzeichnet ist, dass** die zweite Wand (13) an ihrer Peripherie eine verformbare Abdeckzone (15) umfasst, die geeignet ist, zwei Funktionspositionen einzunehmen:
- eine Ruheposition, in der sich die verformbare Zone (15) entlang einer Kurve entwickelt, die sich von der ersten Wand (11) entfernt, wobei die erste Wand dazu bestimmt ist, in das Innere des Kabelrohrs einzudringen,
- eine Befestigungsposition, in der, wenn der Stöpsel am Ende des Kabelrohrs positioniert ist, und die erste zylindrische Wand (11) in das Innere des Kabelrohrs eindringt, die verformbare Zone (15) umgelegt wird, um eine Außenwand des Kabelrohrs (20) abzudecken und festzuklemmen, und sich entlang einer Kurve im Wesentlichen parallel zur ersten Wand (11) entwickelt, um sich dieser anzunähern,
wobei der Übergang von der Ruheposition in die Befestigungsposition durch Anlegen einer Druckkraft (Fp) an die zweite Wand (13) erfolgt.

2. Stöpsel nach Anspruch 1, **dadurch gekennzeichnet, dass** die verformbare Abdeckzone (15) an ihrer Peripherie einen verformbaren Teil umfasst, der geeignet ist, sich in der Befestigungsposition entlang einer Kurve im Wesentlichen senkrecht auf die erste Wand (11) zu entwickeln, um sich dieser anzunähern, und um in eine der Rillen einer Außenwand eines Kabelrohrs einzudringen.

3. Stöpsel nach den Ansprüchen 1 oder 2, **dadurch gekennzeichnet, dass** der Stöpsel (10) aus einem luftdichten Material hergestellt ist.

4. Stöpsel nach einem der Ansprüche 1 bis 3, **dadurch gekennzeichnet, dass** die selbstdurchbohrende Zone (12) gleichmäßig um die Längsachse (Z) verteilt ist und aus einem selbstschließenden elastischen Material hergestellt ist, das, wenn es einmal durchstoßen ist, den Draht wieder umschließt, und sich, wenn der Draht herausgezogen wird, zusammenzieht, um die Dichtigkeit wieder zu gewährleisten.

5. Stöpsel nach einem der vorhergehenden Ansprüche, **dadurch gekennzeichnet, dass** die Auflagezone (14) eine ringförmige Form hat und sich um die Längsachse (Z) entwickelt, wobei die ringförmige Form einen Außendurchmesser größer oder gleich dem Außendurchmesser des Kabelrohrs (20) hat.

6. Stöpsel nach einem der vorhergehenden Ansprüche, **dadurch gekennzeichnet, dass** die erste Wand von zylindrischer Form einen Außendurchmesser kleiner als der Innendurchmesser des Kabelrohrs hat.

7. Verfahren zur Befestigung eines Stöpsels (10) nach einem der vorhergehenden Ansprüche auf einem Kabelrohr, wobei das Verfahren die folgenden Schritte umfasst:
- Durchführen mindestens eines elektrischen Drahtes (30) durch die selbstdurchbohrende Zone (12), wobei sie perforiert wird,
- Aufschieben des Stöpsels (20) auf den mindestens einen elektrischen Draht, um die erste Wand (11) des Stöpsels im Inneren des Kabelrohrs zu positionieren,
wobei das Verfahren **dadurch gekennzeichnet ist, dass** es die folgenden Schritte umfasst:
- Anlegen einer Druckkraft (Fp) sowohl an die Auflagezone (14) als auch an die verformbare Zone (15) der zweiten Wand (13),
- manuelles Begleiten des Umdrehens des Stöpsels (10), wobei sich das Umdrehen durch ein Abdecken des äußeren Kabelrohrs durch die verformbare Zone (15) darstellt.

## Claims

1. Plug for electrical conduit (20) comprising
- a first wall (11) of cylindrical form extending along a longitudinal axis (Z) and comprising at a first end closed by a self-piercing zone (12) capable of being pierced through by the passage of at least one electrical wire (30), said zone extending towards the interior of said plug in a radial direction substantially at right angles to the longitudinal axis (Z);
- a second wall (13) of annular form secured to the first cylindrical wall and extending towards the exterior of said plug in a radial direction, said second wall comprising a bearing zone (14) intended to come to bear on the outer cylindrical edge of an electrical conduit (20);
plug, **characterized in that** the second wall (13) comprises, at its periphery, a deformable overlap zone (15) capable of assuming two operating positions:
- a rest position in which said deformable zone (15) is modelled according to a curve moving away from the first wall (11), said first wall being intended to enter into the electrical conduit
- a fixing position in which, when the plug is positioned on the end of the conduit and said first cylindrical wall (11) enters into the electrical conduit, said deformable zone (15) is folded back to cover and grip an outer wall of the electrical conduit (20) and is modelled according to a curve substantially parallel to the first wall (11) to approach thereto;
the transition from the rest position to the fixing position being produced by the application of a pressing force (Fp) on the second wall (13).

2. Plug according to Claim 1, **characterized in that** the deformable overlap zone (15) comprises, at its periphery, a deformable part capable, in the fixing position, of being modelled according to a curve substantially perpendicular to the first wall (11) to approximate thereto and to enter into one of the ring grooves of an outer wall of an electrical conduit.

3. Plug according to Claim 1 or 2, **characterized in that** the plug (10) is produced in an air-tight material.

4. Plug according to one of Claims 1 to 3, **characterized in that** the self-piercing zone (12) is distributed uniformly around the longitudinal axis (Z) and consists of a self-healing elastic material which, once pierced, retightens around the wire and, when the wire is removed, retracts to restore the seal-tightness.

5. Plug according to any one of the preceding claims, **characterized in that** the bearing zone (14) has an annular form and is modelled around the longitudinal axis (Z), said annular form having an outer diameter greater than or equal to the outer diameter of the electrical conduit (20).

6. Plug according to any one of the preceding claims, **characterized in that** the first wall of cylindrical form has an outer diameter less than the inner diameter of the electrical conduit.

7. Method for fixing a plug (10) according to any one of the preceding claims onto an electrical conduit, said method comprising the following steps:
- passing at least one electrical wire (30) through the self-piercing zone (12) by perforating it,
- sliding the plug (20) over said at least one electrical wire to position the first wall (11) of said plug inside the electrical conduit;
said method being **characterized in that** it comprises the following steps:
- applying a pressing force (Fp) on both the bearing zone (14) and the deformable zone (15) of the second wall (13),
- manually following the turning up of the plug (10), the turning up being illustrated by an overlapping of the outer electrical conduit by the deformable zone (15).
